# EUROPÄISCHE PATENTANMELDUNG

(11) **EP 2 256 381 A1**
(43) Veröffentlichungstag der Anmeldung: **01.12.2010**
(21) Anmeldenummer: 09007040.0
(22) Anmeldetag: 27.05.2009
(51) Int. Cl.: F16J 1/00, F16J 15/32, F16J 15/56, F16D 25/12, F16H 63/06

(54) **Kolben und dessen Verwendung**

(71) Anmelder: Carl Freudenberg KG, 69469 Weinheim (DE)
(72) Erfinder: Kriechbaum, Ralph, 6330 Kufstein (AT); Als, Andreas, 6300 Wörgl (AT); Schachermyer, Wolfgang, 6020 Innsbruck (AT); Trabert, Jens, 69469 Weinheim (DE); Kohn, Jason, 68542 Heddesheim (DE)

(57) **Zusammenfassung**

Kolben, umfassend einen Tragkörper (1), der zumindest stirnseitig einerseits mit einem Dichtring (2) aus elastomerem Werkstoff verbunden ist, wobei der Dichtring (2) zumindest eine Dichtlippe (3, 4) aufweist, die den Tragkörper (1) in radialer Richtung nach außen oder innen überragt, **dadurch gekennzeichnet, dass** die Dichtlippe (3, 4) aus PTFE (5) besteht.

## Beschreibung

### Technisches Gebiet

Die Erfindung betrifft einen Kolben, umfassend einen Tragkörper, der zumindest stirnseitig einerseits mit einem Dichtring aus elastomerem Werkstoff verbunden ist, wobei der Dichtring zumindest eine Dichtlippe aufweist, die den Tragkörper in radialer Richtung nach außen oder innen überragt.

### Stand der Technik

Ein solcher Kolben ist aus der DE 43 20 840 C1 bekannt. Der Kolben ist zur Abdichtung von Teilräumen in einem Gehäuse vorgesehen, die einander in axialer Richtung benachbart zugeordnet sind. Der vorbekannte Kolben wird von einem strömungsfähigen Medium angetrieben.
Der Tragkörper ist einstückig ausgebildet und umschließt einen Permanentmagnet vollständig, wobei stirnseitig beiderseits des Tragkörpers zwei einen axialen Abstand voneinander aufweisende Dichtlippen vorgesehen sind, die aus einem elastomeren Werkstoff bestehen. Zwischen den axial benachbarten Dichtlippen ist ein Führungsring angeordnet, der mit dem Tragkörper einstückig ausgebildet ist. Der Führungsring, der bevorzugt aus PTFE besteht, weist einen geringen Reibungskoeffizienten auf und ist widerstandsfähig gegen abrasiven Verschleiß.

Der Permanentmagnet ist vorgesehen, um die Stellung des Kolbens innerhalb des Gehäuses detektieren zu können.

### Darstellung der Erfindung

Der Erfindung liegt die Aufgabe zugrunde, einen Kolben der eingangs genannten Art derart weiterzuentwickeln, dass die Dichtlippe bessere Gebrauchseigenschaften während einer längeren Gebrauchsdauer aufweist, insbesondere durch eine geringere Reibung an den abzudichtenden Flächen, dass die guten Gebrauchseigenschaften in einem Temperaturbereich von zumindest - 40° C bis 150° C erhalten bleiben, dass Stick-Slip-Efiekte vermieden werden und dass das Reibverhalten des Kolbens innerhalb des Gehäuses auch dann homogen ist, wenn der Kolben mit relativen Überdrücken von bis zu 40 bar beaufschlagt wird.

Diese Aufgabe wird erfindungsgemäß durch einen Kolben mit den Merkmalen von Anspruch 1 gelöst.
Auf vorteilhafte Ausgestaltungen nehmen die auf Anspruch 1 rückbezogenen Unteransprüche Bezug.

Zur Lösung der Aufgabe ist ein Kolben vorgesehen, umfassend einen Tragkörper, der zumindest stimseitig einerseits mit einem Dichtring aus elastomerem Werkstoff verbunden ist, wobei der Dichtring zumindest eine Dichtlippe aufweist, die den Tragkörper in radialer Richtung nach außen oder innen überragt und wobei die Dichtlippe aus PTFE besteht.

Hierbei ist von Vorteil, dass ein solcher Kolben in eihem großen Temperaturbereich von etwa - 40° C bis 150° C gute Gebrauchseigenschaften während einer langen Gebrauchsdauer aufweist und deshalb auch in Automatikgetrieben von Kraftfahrzeugen besonders gut zur Anwendung gelangen kann. Durch die Dichtlippe, die aus PTFE besteht, dichtet diese reibungsarm an den abzudichtenden Flächen ab, auch dann, wenn der Kolben mit Differenzdrücken von etwa 40 bar beaufschlagt wird. Die Beaufschlagung des Kolbens kann einseitig oder beidseitig erfolgen. Der Dichtring kann an den Tragkörper vulkanisiert sein.

Unter PTFE wird im vorliegenden Fall auch ein PTFE-Werkstoff verstanden, der gefüllt sein kann, also zum Beispiel einen Kohle-oder Bronzeanteil aufweist.

Es ist zwar allgemein bekannt, dass PTFE, verglichen mit elastomeren Dichtungswerkstoffen, reibungsarm gleitet und nur einen vergleichsweise geringen Verschleiß aufweist, jedoch wurden Dichtlippen, die aus PTFE bestehen, an Tragkörpern von Kolben, insbesondere von Komplettkolben in Automatikgetrieben, bisher nicht eingesetzt; bisher waren die Dichtlippen ausschließlich aus elastomeren Werkstoffen.

Nach einer ersten Ausgestaltung kann zumindest eine der Dichtlippen durch eine Beschichtung aus PTFE gebildet sein. Eine solche Beschichtung ist beispielsweise folienartig dünn ausgebildet. Die Dicke der Beschichtung beträgt bevorzugt 10 µm bis 50 µm.
Eine solche Beschichtung hat den Vorteil, dass die elastische Nachgiebigkeit der Dichtlippe praktisch nicht nachteilig beeinflusst wird. Außerdem ist die Menge des zur Anwendung gelangenden, vergleichsweise teuren PTFE-Werkstoffs nur sehr gering, so dass der Kolben insgesamt kostengünstig herstellbar ist.

Nach einer weiteren Ausgestaltung besteht die Möglichkeit, dass zumindest eine der Dichtlippen durch eine PTFE-Scheibe gebildet ist, die mit dem elastomeren Werkstoff des Dichtrings stoffschlüssig verbunden ist. Die PTFE-Scheibe kann eine Dicke von 0,1 mm bis 3 mm aufweisen. Eine formstabile PTFE-Scheibe wird im Vergleich zu einer folienartig dünnen Beschichtung aus PTFE hauptsächlich dann zur Anwendung kommen, wenn größere Differenzdrücke abzudichten sind. Nach einem sehr geringen Anfangsverschleiß glasiert die Oberfläche der PTFE-Heschichtung / -Scheibe in ihrem Kontaktbereich mit der abzudichtenden Fläche und wird dadurch sehr verschleißfest.

Sowohl die Beschichtung als auch die Scheibe können mit dem elastomeren Werkstoff des Dichtrings verklebt oder durch Vulkanisation verbunden sein.

In Abhängigkeit vom jeweiligen Anwendungsfall kann der Tragkörper stirnseitig beiderseits mit dem Dichtring verbunden sein, wobei der Dichtring stimseitig beiderseits zumindest eine Dichtlippe aufweist. Der Kolben ist dadurch beiderseits druckbeaufschlagbar, ohne dass die Gefahr besteht, dass abzudichtendes Medium unerwünscht von einem Raum in den benachbarten anderen Raum gelangt.

Der Tragkörper ist bevorzugt kreisringförmig ausgebildet und besteht aus einem polymeren oder metallischen Werkstoff.
Für einen Tragkörper aus einem polymeren Werkstoff spricht, dass der Kolben leicht ist, dadurch eine geringe Massenträgheit aufweist und deshalb präzise hin- und herbewegbar ist. Des weiteren ist von Vorteil, dass das Herstellungsverfahren vereinfacht ist, weil das Zusammenführen von elastomerem Werkstoff, aus dem der Dichtring besteht, und dem Tragkörper in einem Arbeitsschritt erfolgen kann. Das Herstellungsverfahren ist deshalb kostengünstig.

Demgegenüber kann es vorgesehen sein, dass der Tragkörper aus einem metallischen Werkstoff besteht. Ein metallischer Tragkörper hat den Vorteil, dass sich der Tragkörper gut mit dem Dichtring verbinden lässt, beispielsweise durch Vulkanisation. Außerdem ist von Vorteil, dass solche Tragkörper eine große Steifigkeit auch bei geringen Abmessungen aufweisen können, was insbesondere bei Verwendung in Automatik-Getrieben und den darin auftretenden hohen Drücken von hervorzuhebendem Vorteil ist.

Der Dichtring kann den Tragkörper, in Längsrichtung betrachtet, radial außenseitig umschließen. Dadurch ist die Kontaktfläche zwischen dem Tragkörper und dem Dichtring besonders groß, und die beiden Bauteile sind dadurch dauerhaft haftbar miteinander verbunden.

Ferner betrifft die Erfindung die Verwendung des zuvor beschriebenen Kolbens als Schaltkolben in einem Automatikgetriebe eines Kraftfahrzeugs. Schaltkolben, die bisher in Automatikgetrieben von Kraftfahrzeugen zur Anwendung gelangten, hatten Dichtlippen, die ausschließlich aus elastomeren Werkstoffen bestanden. In Automatikgetrieben gelangen ATF-Öle zur Anwendung. ATF-Öle sind Öle, die aus einem raffinierten Mineralöl hergestellt sind und spezielle Anforderungen in Automatikgetrieben erfüllen. Diese Öle übernehmen eine Vielzahl von Funktionen, wie beispielsweise die Schmierung von Ventilen und Zahnrädern oder die Übertragung von Drehmomenten durch die Betätigung des erfindungsgemäßen Kolbens.

Es ist besonders vorteilhaft, einen Kolben, wie zuvor beschrieben, als Schaltkolben in einem Automatikgetriebe eines Kraftfahrzeugs einzusetzen, weil dieser Kolben ein gleichmäßiges Reibverhalten in einem großen Druck- und Temperaturbereich aufweist. Durch die aus PTFE bestehenden Dichtlippen hat der Kolben praktisch kein Losbrechmoment und das Reibverhalten zwischen Losbrechmoment und Gleitreibung unterscheidet sich praktisch nicht.

### Kurzbeschreibung der Zeichnung

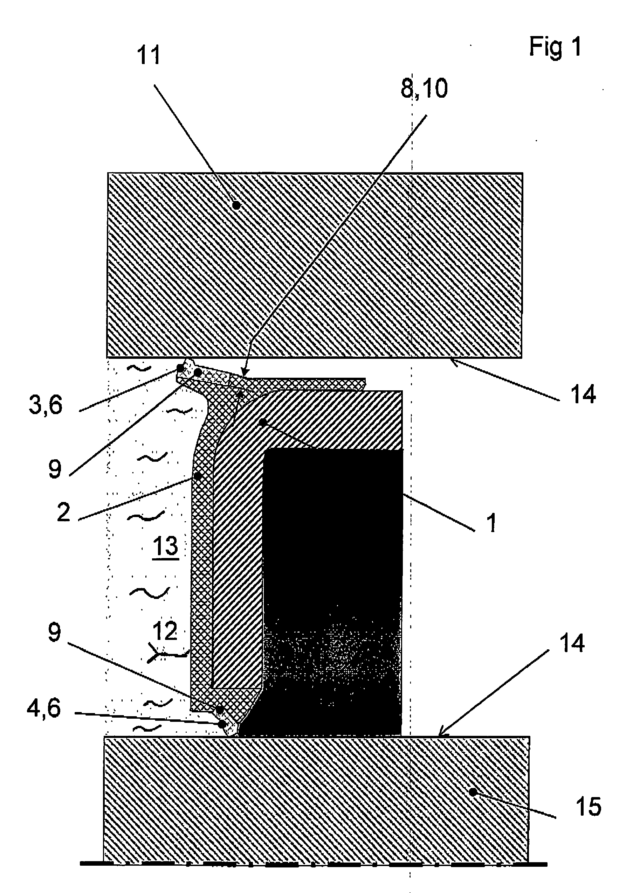

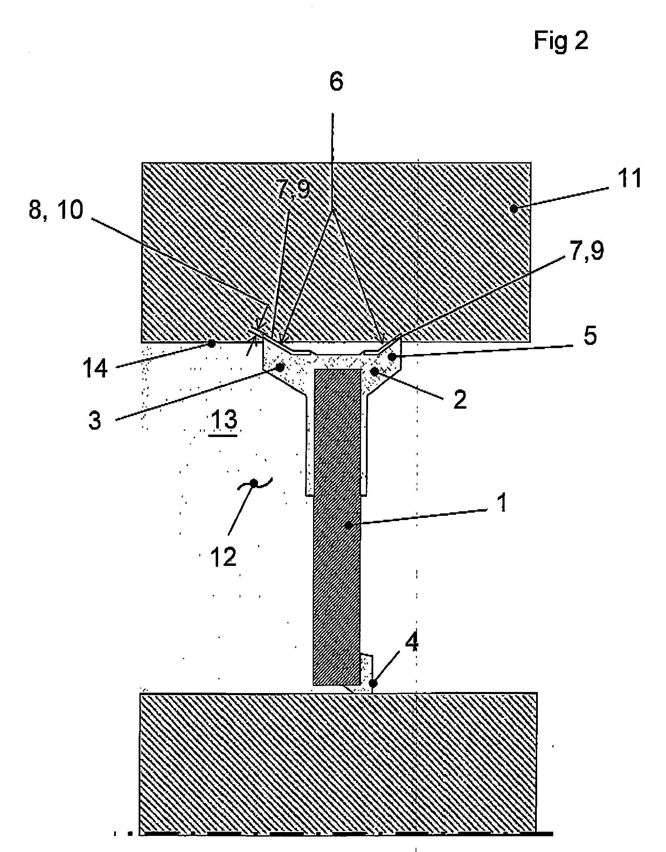

Zwei Ausführungsbeispiele von erfindungsgemäßen Kolben werden nachfolgend anhand der Figuren 1 und 2 näher beschrieben. Diese zeigen jeweils in schematischer Darstellung:
Figur 1 ein erstes Ausführungsbeispiel, bei dem stimseitig beiderseits am Tragkörper jeweils eine Dichtlippe angeordnet ist, ,
Figur 2 ein zweites Ausführungsbeispiel, bei dem alle Dichtlippen aus PTFE bestehen.

### Ausführung der Erfindung

In den Figuren 1 und 2 sind zwei Ausführungsbeispiele eines erfindungsgemäßen Kolbens in schematischer Darstellung gezeigt. Die Kolben sind als Schaltkolben in Automatikgetrieben von Kraftfahrzeugen ausgebildet und translatorisch innerhalb der Gehäuse 11 hin- und herbeweglich. Das abzudichtende Medium 12 ist in den hier gezeigten Ausführungsbeispielen ein ATF-Öl, das innerhalb der abzudichtenden Räume 13 angeordnet ist.

Das PTFE 6 der Dichtlippen 3, 4, 5 bewirkt ein homogenes Reibverhalten des Kolbens innerhalb des Gehäuses 11 in einem großen Temperaturbereich von zumindest - 40° C bis 150° C und zwar auch dann, wenn der Kolben ein- oder beidseitig mit einem Differenzdruck von bis zu 40 bar beaufschlagt ist. Selbst unter diesen - für Automatikgetriebe - extremen Bedingungen werden unerwünschte Stick-Slip-Effekte vermieden, und der Kolben weist dadurch gute Gebrauchseigenschaften, insbesondere eine exakte Schaltbarkeit, während einer langen Gebrauchsdauer auf.

In Figur 1 ist der Tragkörper 1 L-förmig ausgebildet und besteht aus einem metallischen Werkstoff. Der Dichtring 2 weist eine erste Dichtlippe 3 auf, die den Tragkörper 1 in radialer Richtung nach außen überragt und eine zweite Dichtlippe 4, die den Tragkörper 1 in radialer Richtung nach innen überragt, wobei beide Dichtlippen 3, 4 aus einem PTFE-Werkstoff bestehen. Die erste Dichtlippe 3 berührt das Gehäuse 11 und die zweite Dichtlippe 4 die abzudichtende Fläche 14 einer Welle 15 dichtend.

In Figur 2 umfasst der Kolben einen Tragkörper 1, der aus einem metallischen Werkstoff besteht. Dieser Tragkörper 1 ist stirnseitig beiderseits mit dem Dichtring 2 verbunden, wobei der Dichtring 2 stirnseitig beiderseits jeweils eine Dichtlippe 3, 5 aufweist.
Der Dichtring 2 besteht aus einem elastomeren Werkstoff, und die Dichtlippen 3, 5 überragen den Tragkörper 1 in radialer Richtung nach außen und liegen dadurch, wie hier schematisch gezeigt, unter radialer elastischer Vorspannung dichtend an der abzudichtenden Fläche 14 des Gehäuses 11 an.
Beide Dichtlippen 3, 5 bestehen radial außenseitig aus PTFE 6, wobei das PTFE 6 in Form einer folienartig dünnen Beschichtung 7 oder als PTFE-Scheibe 9 ausgebildet sein kann. In jedem der Fälle ist der elastomere Werkstoff, aus dem der Dichtring 2 besteht, stoffschlüssig mit dem PTFE 6 verbunden.

## Patentansprüche

1. Kolben, umfassend einen Tragkörper (1), der zumindest stirnseitig einerseits mit einem Dichtring (2) aus elastomerem Werkstoff verbunden ist, wobei der Dichtring (2) zumindest eine Dichtlippe (3, 4, 5) aufweist, die den Tragkörper (1) in radialer Richtung nach außen oder innen überragt, **dadurch gekennzeichnet, dass** die Dichtlippe (3, 4, 5) aus PTFE (6) besteht.

2. Kolben nach Anspruch 1, **dadurch gekennzeichnet, dass** der Dichtring (2) eine erste Dichtlippe (3) aufweist, die den Tragkörper (1) in radialer Richtung nach außen überragt und eine zweite Dichtlippe (4), die den Tragkörper (1) in radialer Richtung nach innen überragt und dass beide Dichtlippen (3, 4) aus PTFE (6) bestehen

3. Kolben nach einem der Ansprüche 1 oder 2, **dadurch gekennzeichnet, dass** zumindest eine der Dichtlippen (3, 4) durch eine Beschichtung (7) aus PTFE (6) gebildet ist

4. Kolben nach Anspruch 3, **dadurch gekennzeichnet, dass** die Beschichtung (7) folienartig ausgebildet ist und dass die Dicke (8) der Beschichtung (7) 10 µm bis 50 µm beträgt.

5. Kolben nach einem der Ansprüche 1 oder 2, **dadurch gekennzeichnet, dass** zumindest eine der Dichtlippen (3, 4, 5) durch eine PTFE-Scheibe (9) gebildet ist, die mit dem elastomeren Werkstoff des Dichtrings (2) stoffschlüssig verbunden ist.

6. Kolben nach Anspruch 5, **dadurch gekennzeichnet, dass** die PTFE-Scheibe (9) eine Dicke (10) von 0,1 mm bis 3 mm aufweist.

7. Kolben nach einem der Ansprüche 1 bis 6, **dadurch gekennzeichnet, dass** der Tragkörper (1) stimseitig beiderseits mit dem Dichtring (2) verbunden ist und dass der Dichtring (2) stimseitig beiderseits zumindest eine Dichtlippe (3, 5) aufweist.

8. Kolben nach einem der Ansprüche 1 bis 7, **dadurch gekennzeichnet, dass** der Tragkörper (1) kreisringförmig ausgebildet ist und aus einem polymeren oder metallischen Werkstoff besteht.

9. Kolben nach einem der Ansprüche 1 bis 8, **dadurch gekennzeichnet, dass** der Dichtring (2) den Tragkörper (1), in Längsrichtung betrachtet, radial außenseitig umschließt.

10. Verwendung eines Kolbens gemäß einem der Ansprüche 1 bis 9 als Schaltkolben in einem Automatikgetriebe eines Kraftfahrzeugs.
